# EUROPEAN PATENT SPECIFICATION

(11) **EP 1 925 149 B1**
(45) Date of publication and mention of the grant of the patent: **17.04.2013**
(21) Application number: 06790694.1
(22) Date of filing: 15.09.2006
(51) Int. Cl.: H04M 11/04, G08B 25/08

(54) **TELEPHONE LINE COMMUNICATION INTERFACE**
TELEFONLEITUNGS-KOMMUNIKATIONSSCHNITTSTELLE
INTERFACE DE COMMUNICATION DE LIGNE TELEPHONIQUE

(30) Priority: 15.09.2005 US 717299 P
(43) Date of publication of application: 28.05.2008
(73) Proprietor: Tyco Safety Products Canada Ltd., Concord, Ontario L4K 4L2 (CA)
(72) Inventor: PILDNER, Reinhart, K., Brampton, Ontario L6V 1Z9 (CA)
(74) Representative: Wright, Howard Hugh Burnby
(86) International application number: PCT/CA2006/001524
(87) International publication number: WO 2007/030945

(56) References cited:
- EP-A2- 0 338 654
- WO-A-98/33285
- WO-A1-97/23985
- WO-A1-02/093878
- WO-A1-02/103989
- CA-A1- 2 243 224
- US-A- 4 203 006
- US-A- 4 807 278
- US-A- 5 291 545
- US-A- 5 422 939
- US-B1- 6 272 220
- "Attachments to Public Switched Telephone Network (PSTN); General technical requirements for equipment connected to an analogue subscriber interface in the PSTN (Candidate NET 4); ETS 300 001" ETSI STANDARDS, LIS, SOPHIA ANTIPOLIS CEDEX, FRANCE, vol. AT, 1 August 1992 (1992-08-01), XP014041279 ISSN: 0000-0001

## Description

### BACKGROUND OF THE INVENTION

This invention relates generally to alarm systems, and more generally to, a communication interface between an alarm system and a telephone network.

Security alarm systems are utilized in a variety of applications in both residential and commercial environments. Security alarms monitor one or more remote components and, based upon feedback from the remote components, carry out various security and emergency related functions. Security alarm systems typically communicate with one or more remote terminals, such as at a host or central operations terminal, over conventional phone lines maintained within the phone network.

Security alarm systems generally include a security panel joined to a modem that provides bidirectional communication over the phone network. The modem conveys security and emergency related data at various connection speeds (e.g. 2400 bps) between the phone network and the security panel.

A telephone line communication interface may be placed between the modem and/or the security panel, and the incoming phone line(s). The communication interface works to transfer control from the house phone to the security panel when the security panel requests to transfer data to a monitoring station over the phone network. Each phone network operates with a standardized profile of parameters such as line input and output levels, signal attenuation, line impedance and the like. One example of an average US line profile is a line impedance of 600 ohms, a line output level of approximately -23.5dBm, a line input level of -10dBm, and a line attenuation of 13.5dBm. The communication interface provides the interface to the phone network by matching impedance levels, ring levels, and the like. Different countries and geographic regions have different line requirements which, in the past, have typically required many different build configurations of the communication interface which increases the cost.

The phone line typically has two wires interfacing with the communication interface which are referred to herein as TIP and RING. When the alarm system goes off-hook requesting a phone line, there is a level of voltage across TIP and RING. The tip-to-ring voltage may change based on the length of the phone line, wherein a longer phone line results in a lower tip-to-ring voltage as a longer phone line represents a higher resistance in the phone wire. Typically, communication interfaces have used a transmit opto-coupler and a receive opto-coupler connected in series with one another. A minimum amount of off-hook voltage is required for the opto-couplers to operate properly, thus limiting the operable length of the phone line.

Therefore, a need remains for a communication interface which meets the requirements of different countries with a minimal number of build configurations and which requires less tip-to-ring voltage when in an off-hook condition to enable operation over longer phone lines.

US 6272220 discloses an opto-coupled line circuit arranged with a diode bridge providing uniform direction current flow so as to eliminate the mechanical switch hook contact. The circuit includes a receive circuit, a transmit circuit and an opto-coupler which is used as the hook switch for the circuit.

### BRIEF DESCRIPTION OF THE INVENTION

According to a first aspect of the invention, a telephone line communication interface (TLCI) module configured to interface a security panel with a phone line of a phone network, comprises: a receive opto-coupler having an input side and an output side, the input side including an input line configured to receive a signal on the phone line from the phone network, the output side including an output line configured to convey the signal to a security panel; a transmit opto-coupler having an input side and an output side, the transmit opto-coupler input side having an input line configured to receive transmit signals from the security panel, the transmit opto-coupler output side having an output line configured to convey the transmit signal to the phone line of the phone network, the transmit opto-coupler output side being joined in parallel with the receive opto-coupler input side; and a hook control opto-coupler having a hook input side and a hook output side, the hook input side having a hook control line configured to receive a hook signal from the security panel, the hook output side having a hook input line and a hook output line, the hook output line activating a hook switch to convey the hook signal to the phone line of the phone network, the hook output side being joined serially with the receive input side of the receive opto-coupler.

According to a second aspect of the invention, a security system comprises a security panel for performing control operations associated with at least one of security and emergency functions; and a telephone line communication interface (TLCI) module configured to interface the security panel with a phone network, the TLCI module comprising: a receive opto-coupler having an input side and an output side, the input side including an input line configured to receive a signal on the phone line from the phone network, the output side including an output line configured to convey the signal to a security panel; a transmit opto-coupler having an input side and an output side, the transmit opto-coupler input side having an input line configured to receive transmit signals from the security panel, the transmit opto-coupler output side having an output line configured to convey the transmit signal to the phone line of the phone network, the transmit opto-coupler output side being joined in parallel with the receive opto-coupler input side; and a hook control opto-coupler having a hook input side and a hook output side, the hook input side having a hook control line configured to receive a hook signal from the security panel, the hook output side having a hook input line and a hook output line, the hook output line activating a hook switch conveying the hook signal to the phone line of the phone network, the hook input side being joined serially with the receive input side.

### BRIEF DESCRIPTION OF THE DRAWINGS

FIG. 1 illustrates a block diagram of a security alarm system that is formed in accordance with an embodiment of the present invention.

FIG. 2 illustrates a block diagram of a portion of the TLCI module formed in accordance with an embodiment of the present invention.

FIG. 3 illustrates a block diagram of the TLCI module interconnected with the internal phone lines, external phone lines, and the security panel in accordance with an embodiment of the present invention.

FIG. 4 illustrates a schematic diagram of the TLCI module in accordance with an embodiment of the present invention.

FIG. 5 illustrates a chart of country/regions, corresponding telephone line impedance and tolerance requirements, and return loss requirements over the associated frequency range in accordance with an embodiment of the present invention.

FIG. 6 illustrates a chart of build options, associated country/regions, and examples of component values which may be used for the impedance matching network in accordance with an embodiment of the present invention.

The foregoing summary, as well as the following detailed description of certain embodiments of the present invention, will be better understood when read in conjunction with the appended drawings. To the extent that the figures illustrate diagrams of the functional blocks of various embodiments, the functional blocks are not necessarily indicative of the division between hardware circuitry. Thus, for example, one or more of the functional blocks (e.g., processors or memories) may be implemented in a single piece of hardware (e.g., a general purpose signal processor or a block or random access memory, hard disk, or the like). Similarly, the programs may be stand alone programs, may be incorporated as subroutines in an operating system, may be functions in an installed software package, and the like. It should be understood that the various embodiments are not limited to the arrangements and instrumentality shown in the drawings.

### DETAILED DESCRIPTION OF THE INVENTION

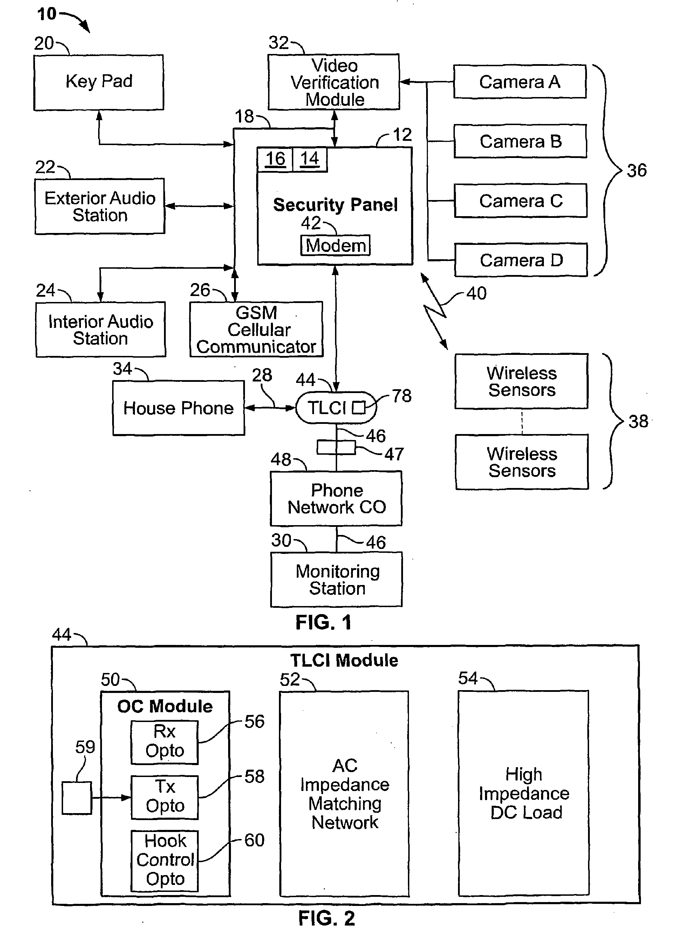

FIG. 1 illustrates a block diagram of a security alarm system 10 that is formed in accordance with an embodiment of the present invention. The system 10 includes a security panel 12 configured to perform various security and emergency related functions. The security panel 12 may include, among other things, a processor module 14, memory 16, and modem 42. A telephone line communication interface (TLCI) module 44 may interface with the modem 42 and/or the security panel 12, and may be integrated with, or separate from, the security panel 12. The TLCI module 44 is interconnected with external telephone (phone) lines 46 of a phone network central office (CO) 48 as well as internal phone line(s) 28 connected to house phone(s) 34. The security panel 12 may connect to and receive communications from a monitoring station 30 via the TLCI module 44, phone lines 46 and phone network CO 48. Voice and data are conveyed through the modem 42, TLCI module 44 and phone lines 46 bi-directionally.

The phone lines 46 have a line impedance 47 which is determined by the country or geographic area or region. Different line impedances 47 exist, and the TLCI module 44 has an impedance matching circuit 78 having components chosen to accommodate multiple countries and areas. Therefore, instead of each country requiring a different build of the TLCI module 44, a minimal number of build options, such as one, two or three build options, may be provided. Therefore, each build option is configured to meet the requirements of multiple countries or areas.

The security panel 12 communicates over a single, common communications bus 18 with various components, such as keypad 20, exterior audio station 22, interior audio station 24, GSM cellular communicator 26, video verification module 32, cameras 36 and the like. As shown in FIG. 1, the modem 42 is a separate component from the processor module 14. Optionally, the modem 42 may be part of the processor module 14. As a further option, the modem 42 may communicate with the processor module 14 over the bus 18 or over a separate dedicated bus (not shown). The security panel 12 may also be joined to wireless sensors 38 through a wireless link 40. The wireless link 40 may represent an RF link, an IR link and the like. The number of video cameras 36, key pads 20, exterior audio stations 22, interior audio stations 24, GSM cellular communicators 26, video verification modules 32, modems 42 and wireless sensors 38 may vary. The security panel 12 affords integrated audio and video features through the use of the communications bus 18 which carries control, event and configuration data, as well as audio and video data. Examples of audio and video features include audio intercom, video surveillance, video for intercom, audio verification of the alarm events, video verification of the alarm events and remote access of audio and video data. It is understood that all, or only a portion, of the audio and video features, and components illustrated in FIG. 1, may be provided and/or connected through the bus 18.

FIG. 2 illustrates a block diagram of a portion of the TLCI module 44. An opto-coupler (OC) module 50, AC impedance matching network 52, and high impedance DC load 54 are formed within. The OC module 50 comprises a receive opto-coupler 56 interconnected in parallel with a transmit opto-coupler 58. By placing the receive and transmit opto-couplers 56 and 58 in parallel, the dynamic range over which the TLCI module 44 can operate is increased. Performance may be improved by approximately 40% over configurations having the receive and transmit opto-couplers interconnected serially. Therefore, the TLCI module 44 will operate over longer phone lines 46 which have lower tip-to-ring voltages. In other words, the TLCI module 44 will work at lower voltages than previous configurations having the receive and transmit opto-couplers 56 and 58 interconnected serially with one another, and thus supports the use of longer phone lines 46.

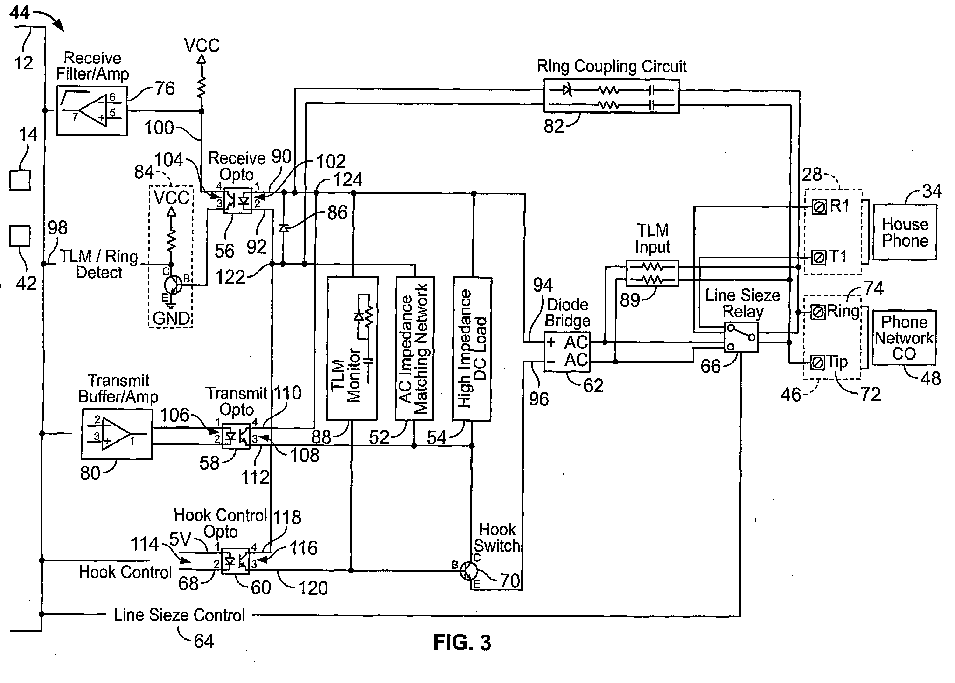

A hook control opto-coupler 60 is connected in series with the receive opto-coupler 56. The hook opto-coupler 60 is used to turn hook switch 70 (FIG. 3) on for off-hook and dial-pulse control. The receive and hook control opto-couplers 56 and 60 form a receive loop bias circuit.

The AC impedance matching network 52 comprises components having values which may be changed, if necessary, to provide the signal characteristics necessary for operation in different countries and areas. By carefully choosing the values, a minimal number of build configurations may be established to meet the requirements of each country and area as discussed previously, which minimizes the cost associated with producing multiple build configurations. With the exception of the AC impedance matching network 52, the TLCI module 44 may remain unchanged from one build to the next. Optionally, components within the high impedance DC load 54 may also be changed to vary the current characteristics and/or requirements of each country and area. Although illustrated separately in FIGS. 2 and 3, the AC impedance matching network 52 and the high impedance DC load 54 may comprise a sub-set of common components.

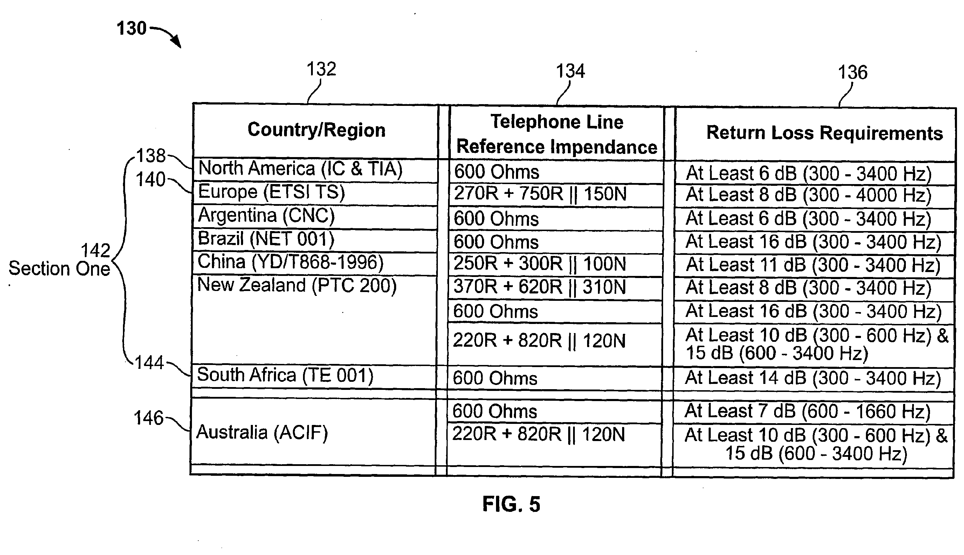

FIG. 5 illustrates a chart 130 of country/regions 132, corresponding telephone line reference impedance 134, and return loss requirements 136 over the associated frequency range. North America 138, for example, has an approximate 600 ohm line impedance requirement. Europe 140 has complex impedance having a range of impedance from approximately 466 ohms to approximately 889 ohms with an associated 150 nano-farad capacitance. By way of example, the 466 ohms is based on 270 ohms plus 750 ohms in parallel with 150 nF at a frequency of 4000 Hz, and the 889 ohms is based on 270 ohms plus 750 ohms in parallel with 150 nF at a frequency of 300hz. Therefore, North America 138 has a first range of line impedance and Europe 140 has a second range of line impedance. By carefully choosing components within the impedance matching circuit 78, a first build option can meet the requirements of North America 138 and Europe 140, as well as the other countries listed in Section One 142. Second and third build options are used for South Africa 144 and Australia 146.

FIG. 3 illustrates a block diagram of the TLCI module 44 interconnected with the internal phone lines 28, phone lines 46, and the security panel 12. The TLCI module 44 may optionally be connected with the modem 42, processor module 14, and/or other interfacing and/or controlling component.

The receive, transmit, and hook control opto-couplers 56, 58 and 60 each include a light emitting diode (LED) that is located in proximity to a photosensitive transistor. For example, current is supplied to the LED in the receive opto-coupler 56 through receive input line 90 and flows out through return line 92. As the current varies, the brightness of the LED varies proportionally. The transistor in the receive opto-coupler 56 adjusts its conductivity based on the amount of exposed light. As the light from the LED increases, the current flow passed by the transistor increases linearly. The LEDs and transistors in the transmit and hook control opto-couplers 58 and 60 operate in a similar manner.

The receive opto-coupler 56 has a receive input side 102 (diode-side) and a receive output side 104 (transistor-side). The receive input side 102 has the receive input line 90 that receives the signal from the phone line 46 and the return line 92. The receive output side 104 has a receive output line 100 which conveys the signal to the security panel 12. The transmit opto-coupler 58 has a transmit input side 106 and a transmit output side 108. The transmit input side 106 has a transmit input line 110 that receives signals form the security panel 12, and transmit output line 112 which conveys the signal to the phone line 46. The hook control opto-coupler 60 has a hook input side 114 and a hook output side 116. The hook input side 114 includes a hook control line 68 that receives a hook signal from the security panel 12. The hook output side 116 has a hook input line 118 and a hook control output line 120.

The hook output side 116 is joined serially with the receive input side 102 of the receive opto-coupler 56, providing it with a constant current that remains the same regardless of telephone line voltage. Also, the AC signal from the phone line 46 from the negative voltage side 96 of the diode bridge 62 passes through the hook switch 70, the impedance matching network 52 via C91 to the receive input side 102 of the receive opto-coupler 56, then to the positive voltage side 94 of the diode bridge 62.

The receive opto-coupler 56 and the hook control opto-coupler 60 are connected serially at node 122 via the return line 92 and the hook input line 118. The transmit output side 108 of the transmit opto-coupler 58 in connected in parallel with the receive input side 102 of the receive opto-coupler 56 at node 124 via receive input line 90 and transmit input line 110, and also at the hook switch 70 across the high impedance DC load 54.

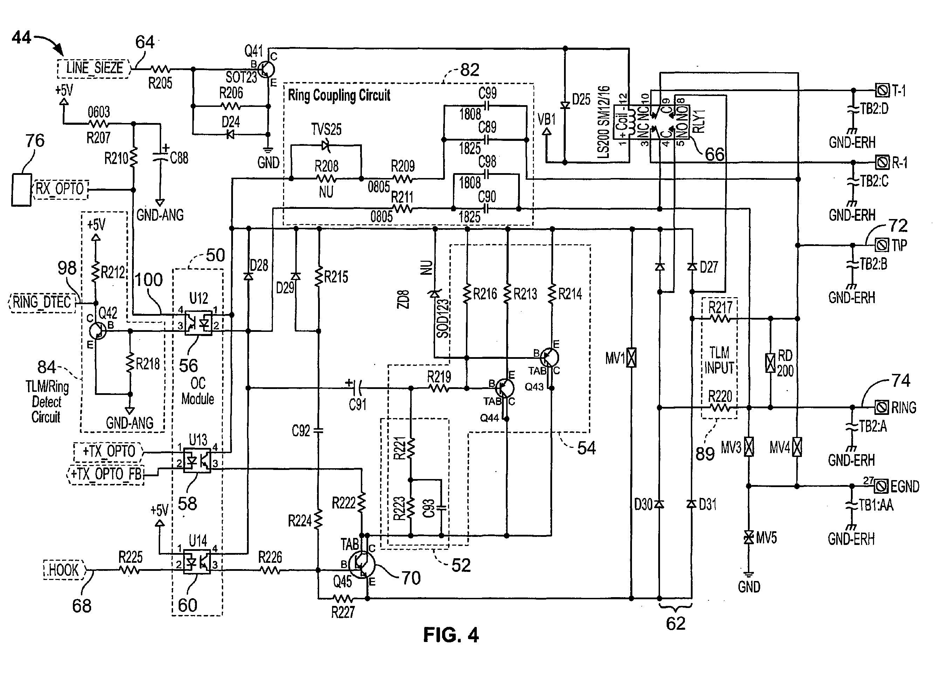

FIG. 4 illustrates a schematic diagram of the TLCI module 44. The schematic diagram represents a configuration having at least resistors, diodes, capacitors and transistors, each of which is denoted with an R, D, C or Q label, respectively, followed by a unique number. The receive, transmit and hook control opto-couplers 56, 58 and 60 within the OC module 50 are schematically represented as discrete components that are labeled U12, U13, and U14, respectively. The following discussion of the components in FIG. 4 will use some, but not all of these unique labels. FIGS. 3 and 4 will be discussed together.

In general, when the security panel 12 detects an alarm condition, it wishes to communicate with the monitoring station 30. The security panel 12 utilizes the TLCI module 44 to seize control of the phone line 46 and set an off-hook condition. The off-hook condition causes current to flow through TIP 72 and RING 74. The high impedance DC load 54 is connected across TIP 72 and RING 74 of the phone line 46, causing enough loop current to flow through the phone line 46 to indicate an off-hook condition to the phone network CO 48. The phone network CO 48 detects the off-hook condition and sends a dial tone on the phone line 46. When the security panel 12 detects the dial tone, the security panel 12 may use the modem 42 to dial the monitoring station 30 (FIG. 1) using DTMF, dial pulsing, and the like, depending upon the programming and requirements of the phone network CO 48. The AC impedance matching network 52 provides the impedance matching between the TLCI module 44 and the phone lines 46.

When the monitoring station 30 receives the call on the phone line 46, the monitoring station 30 transmits a hand shake tone. The security panel 12 detects the hand shake tone through the receive loop formed by receive and hook control opto-couplers 56 (U12) and 60 (U14), which are connected in series. The security panel 12 then may transmit and receive data using the transmit and receive opto-couplers 58 (U13) and 56 (U12). The monitoring station 30 may transmit one or more acknowledge signals to acknowledge receipt of transmitted data, as well as transmit other data as necessary. Bias for the transmit opto-couplet 58 is provided through transmit buffer/amplifier80. The receive opto-coupler 56 is biased through the phone line 46 via the hook control opto-coupler 60.

More specifically, to gain control of the internal phone line 28, the security panel 12 sets line seize control 64 to HIGH which turns on Q41b. This energizes line seize relay 66 (RLY1) which transfers the phone line voltage of the phone lines 46 to diode or steering bridge 62 (comprising D26, D27, D30 and D31). The diode bridge 62 may also be referred to as a receive circuit. Thus, the line seize relay 66 (RLY1) transfers control of the phone line 46 from the house phone 34 to the security panel 12. If the house phone 34 is in use, it is disconnected by this transfer. This prevents anyone from compromising the communication of the alarm event to the monitoring station 30, either by accident or on purpose.

Receive and on/off-hook operations are controlled by the receive opto-coupler 56 (U12) and the hook control opto-coupler 60 (U14). An off-hook condition is initiated by setting hook control line 68 to LOW or zero volts. This causes current to flow through the diode of the hook control opto-coupler 60. Assuming a Current-Transfer-Ratio (CTR) of 100%, the current through the diode of the hook control opto-coupler 60 will be transferred to the collector (pin 4) of the hook control opto-coupler 60. The current passes through the diode of the receive opto-coupler 56, biasing the receive opto-coupler 56, and also into the base of the hook switch 70 (Q45). When the hook switch 70 turns on, the high impedance DC load 54 (comprising Q43, Q44, R213, R214, R216, R219, R221, R223, and C93) is connected across TIP 72 and RING 74 of the phone line 46, increasing the amount of loop current flowing through the phone line 46 to indicate an off-hook condition to the phone network CO 48. The AC signal sent through the phone line loop is picked up by the diode in the receive opto-coupler 56 (U12), transferred to the collector (pin 4) of the receive opto-coupler 56 (U12) (transistor side) and converted to a voltage, which is then received by output line 100 and detected by receive amplifier/high-pass filter 76, then passed to the security panel 12. The hand shake tone from the monitoring station 30 modulates current in the telephone loop.

The AC impedance matching network 52 to the phone line 46 comprises R221, R223 and C93. As illustrated in FIG. 4, the components R221, R223 and C93 are shared by the AC impedance matching network 52 and the high impedance DC load 54.

As discussed previously, different countries and areas require different impedance matching to work with the phone lines 72 when the phone line 46 is in an off-hook condition. Each country or geographic area has specified impedance parameters or ranges within which the equipment must work as illustrated in FIG. 5. For example, the phone line impedance may be 600 ohms in North America, and thus the impedance of the AC impedance matching network 52 is 600 ohms when the phone line 46 is in an off-hook condition. In contrast, Europe may have complex impedance in which the resistance value of the phone line 46 changes depending upon the frequency being transmitted. The frequencies across the range may be correlated to actual impedance values, such as along a curve. Components within the AC impedance matching network 52, as well as the high impedance DC load 54, are selected to satisfy the actual impedance.

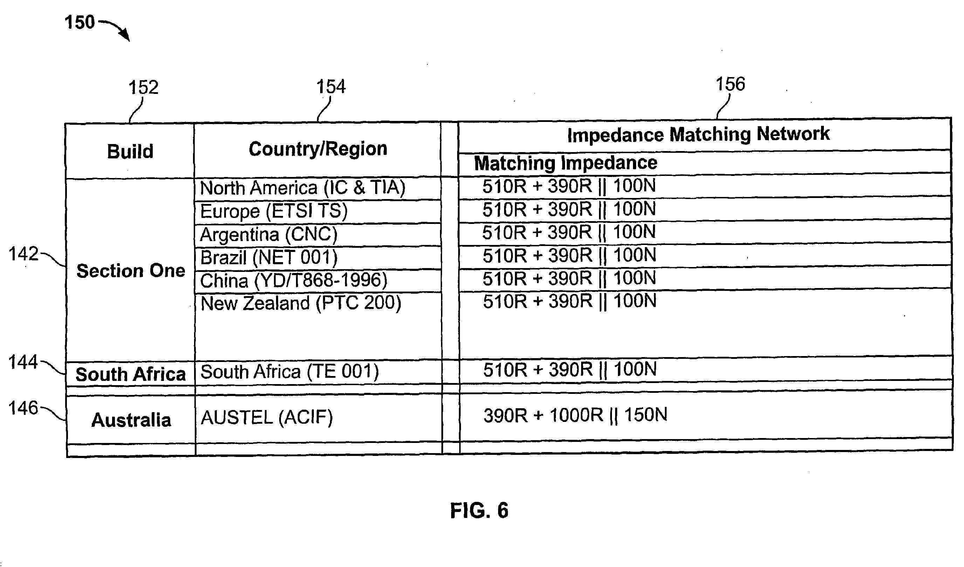

FIG. 6 illustrates a chart 150 of build options 152, associated country/regions 154, and examples of component values which may be used for the impedance matching network 156. Within the examples of the impedance matching network 156, each country/region has two corresponding resistor values indicated for R221 and R223 of the impedance matching network 52 (FIG. 4) and one capacitor value indicated for C93. For example, North America and Europe may both use resistor values of 510 ohms and 390 ohms with a capacitor value of 100 nano-farad. Each country/region 154 within Section One 142 may use the same resistor and capacitor values, even though the telephone line reference impedances 134 (FIG. 5) are not the same. This greatly reduces the overall number of different build options needed. Different resistor and capacitor values are used for South Africa 144 and Australia 146 to meet their particular requirements.

It should be understood that other countries/regions which are not listed may be included within any of the builds 152 of Section One 142, South Africa 144, and Australia 146 if the line impedance requirements are met. Also, different resistor and capacitor values may be used, as well as more than two resistors and/or more than one capacitor to meet the line impedance requirements. In addition, other components may be used within the impedance matching network 52 to meet the line impedance requirements.

When the security panel 12 wants to transmit data, the security panel 12 uses transmit buffer/amplifier 80 to bias on the transmit opto-coupler 58 (U13). The line seize control 64 is pulled HIGH, which transfers the phone line voltage to and through the diode bridge 62. Activating the hook control line 68 causes bias current to flow through the receive opto-coupler 56, hook control opto-coupler 60, and the hook switch 70. This turns on the high impedance DC load 54 which draws enough current to cause a detectable off-hook condition at the phone network CO 48. Due to the biasing of the transmit opto-coupler 58 and the current-transfer-ratio, the current that flows through the LED of the transmit opto-coupler 58 also flows from positive voltage side 94 (FIG. 3) of the diode bridge 62 through transmit opto-coupler 58, R222 (FIG. 4), and hook switch 70 to negative voltage side 96 of the diode bridge 62, out to RING 74, thus creating a transmit signal path or transmit loop to the phone line 46. As data is transmit through the transmit opto-coupler 58, the current flowing through the diode of the transmit opto-coupler 58 is modulated. This modulation is passed through to the transistor side where it modulates the current in the DC path as described above. This current modulation is then applied to the phone line 46 through the diode bridge 62. The data may be transmit in packets, pulse per second, F-tones, or other transmission protocol.

The security panel 12 also uses the TLCI module 44 to detect an incoming call or ring on the phone line 46. A ring detect or ring coupling circuit 82 may comprise the components C98, C99, R209, R211, TVS25, U12, and D28. The ring coupling circuit 82 indicated on FIG. 4 is for reference, and it should be noted that not all of the components are included for clarity. C98 and C99 are connected to RING 74 and TIP 72, respectively. The ring coupling circuit 82 may be changed to meet certain build requirements, such as for South Africa. When the security panel 12 is in an on-hook condition and a ring signal occurs across TIP 72 and RING 74, it is coupled into the TLCI module 44 through C98 and C99 of the ring coupling circuit 82. For example, the ring signal may be a sinewave, such as a 20 Hz sinewave having a 253 V peak-to-peak signal, typical. The ring current is limited by R209 and R211, and the sensitivity level of the ring signal is set by TVS25. When the ring signal is greater than the breakdown threshold of TVS25 (in the positive voltage direction) ring current flows through the LED of the receive opto-coupler 56. The ring signal is then coupled to the receive input side 102 of the receive opto-coupler 56 which drives Q42 of telephone line monitoring (TLM)/ring detect circuit 84 (which may be used as a level shifter). The output of the TLM/ring detect circuit 84 on line 98 is monitored by the security panel 12 to determine if a ring signal has occurred.

On the negative voltage cycle of the ring signal, TVS25 (of ring coupling circuit 82) and ring detect diode 86 (D28) are forward biased. The forward voltage across the ring detect diode 86, which is in parallel with the LED of the receive opto-coupler 56 makes sure that the LED of the receive opto-coupler 56 is off during the negative voltage cycle which then turns off the drive to the TLM/Ring detect circuit 84. In this way, the ring frequency across TIP 72 and RING 74 is isolated and coupled to the low voltage side and also level shifted for interfacing to the processor module 14.

The TLCI module 44 also provides for a telephone line monitoring (TLM) operation, which may be accomplished by TLM monitoring module 88 (comprising D26, D27, D30, D31, R215, D29, C92, R224, R227, and R226), TLM input 89 (comprising R217 and R220), as well as receive opto-coupler 56 and hook control opto-coupler 60. When the security panel 12 is in the on-hook condition, the phone line 46 will be monitored. During this time, TIP 72 and RING 74 voltage is applied to the TLM input 89, allowing a small amount of current to charge C92. When the security panel 12 wants to perform a TLM function, such as to determine if the phone line 46 is present, the hook control line 68 is pulled LOW to turn on the LED of the hook control opto-coupler, which then turns on the transistor of the hook control opto-coupler 60, thus providing a discharge path for C92 through the LED of the receive opto-coupler 56. The discharge of C92 through the LED of the receive opto-coupler 56 causes the LED to turn on, generates a pulse across pins 3 and 4 of the receive opto-coupler 56, and drives the TLM/ring detect circuit 84 (Q42) on. This pulse duration is applied to the security panel 12 via line 98. If the security panel 12 detects a pulse, the phone line 46 is deemed operable. If no pulse is detected at this time, the phone line 46 is deemed to be in a fault condition. The TLM function may be performed periodically, and the results displayed and/or logged at the security panel 12.

## Claims

1. A telephone line communication interface, TLCI, module (44) configured to interface a security panel (12) with a phone line (46) of a phone network (48), the TLCI module (44) comprising:
a receive opto-coupler (56) having an input side (102) and an output side (104), the input side (102) including an input line (90) configured to receive a signal on the phone line (46) from the phone network (48), the output side (104) including an output line (100) configured to convey the signal to a security panel (12);
a transmit opto-coupler (58) having an input side (106) and an output side (108), the transmit opto-coupler input side (106) having an input line (110) configured to receive transmit signals from the security panel (12), the transmit opto-coupler output side (108) having an output line (112) configured to convey the transmit signal to the phone line (46) of the phone network (48), the transmit opto-coupler output side (108) being joined in parallel with the receive opto-coupler input side (102); and
**characterized by** a hook control opto-coupler (60) having a hook input side (14) and a hook output side (116), the hook input side having a hook control line (68) configured to receive a hook signal from the security panel (12), the hook output side (116) having a hook input line (118) and a hook output line (120), the hook output line (120) activating a hook switch (70) to convey the hook signal to the phone line (46) of the phone network (48), the hook output side (116) being joined serially with the receive input side (102) of the receive opto-coupler (56).

2. A TLCI module as claimed in claim 1, further comprising an impedance matching network (52) interconnected with the receive input side (102) of the receive opto-coupler and the transmit output side (108) of the transmit opto-coupler, the impedance matching network (52) being configured to provide impedance matching with the phone network (48).

3. A TLCI module as claimed in claim 1, further comprising an impedance matching network (52) interconnected with the receive input side (102) of the receive opto-coupler and the transmit output side (108) of the transmit opto-coupler, the impedance matching network (52) being configured to provide an impedance of approximately 600 ohms to provide impedance matching with the phone network (48).

4. A TLCI module as claimed in claim 1, further comprising an impedance matching network (52) comprising at least one resistor (R221, R223) and one capacitor (C93) interconnected with one another, the impedance matching network (52) being interconnected with the receive input side (102) of the receive opto-coupler and the transmit output side (108) of the transmit opto-coupler, the impedance matching network (52) being configured to provide impedance matching with the phone network (48).

5. A TLCI module as claimed in any one of claims 1 to 4, wherein the hook signal further comprises signals indicating on-hook and off-hook conditions, the TLCI module (44) further comprising a high impedance DC load (54) joined with the receive opto-coupler (56) and the hook control opto-coupler (60), the high impedance DC load (54) being configured to draw a level of current indicating to the phone network (46) when the hook signal is in the off-hook condition.

6. A TLCI module as claimed in claim 1, further comprising an impedance matching network (52) being interconnected with the receive input side (102) and the transmit output side (108), the impedance matching network (52) being configured to provide an impedance of approximately 600 ohms to provide impedance matching with a first phone network, the impedance matching network (52) being further configured to provide complex impedance matching with a second phone network.

7. A TLCI module as claimed in any one of claims 1 to 6, further comprising means for detecting a ring signal (82) being transmitted on the phone network from a location remote from the TLCI module.

8. A module as claimed in any one of claims 1 to 7, further comprising:
means (52) for matching the impedance of the phone line (46) of the phone network (48), the impedance of the phone line being at least one of set at predetermined resistance and capacitance values and at least one range of resistance and capacitance values corresponding to at least one predetermined range of frequencies.

9. A TLCI module as claimed in any one of the preceding claims, wherein the transmit and receive opto-couplers (58, 56) are configured in parallel with one another to reduce a level of operational voltage required on the phone network (48).

10. A TLCI module as claimed in any one of claims 2 to 9, wherein the means (52) for matching impedance is interconnected with the receive input side (102) and the transmit output side (108), the means (52) for matching impedance being configured to provide an impedance of approximately 600 ohms.

11. A TLCI module as claimed in any one of the preceding claims, wherein the hook signal further comprises signals indicating on-hook and off-hook conditions, the TLCI module (44) further comprising a high impedance DC load (54) joined with the receive opto-coupler (56) and the hook control opto-coupler (60), the high impedance DC load (54) being configured to draw a level of current that indicates to the phone network (48) when the hook signal is in the off-hook condition.

12. A TLCI module as claimed in any one of the preceding claims, further comprising internal phone lines connecting the phone network to a house phone (34), the TLCI module further comprising means for transferring control of the phone network between the security panel (12) and the house phone (34) based on a control signal from the security panel (12).

13. A security system comprising:
a security panel (12) for performing control operations associated with at least one of security and emergency functions; and
a telephone line communication interface (TLCI) module (44) configured to interface the security panel (12) with a phone network (48), the TLCI module (44) comprising:
a receive opto-coupler (56) having an input side (102) and an output side (104), the input side (102) including an input line (90) configured to receive a signal on the phone line (46) from the phone network (48), the output side (104) including an output line (100) configured to convey the signal to a security panel (12);
a transmit opto-coupler (58) having an input side (106) and an output side (108), the transmit opto-coupler input side (106) having an input line (110) configured to receive transmit signals from the security panel (12), the transmit opto-coupler output side (108) having an output line (112) configured to convey the transmit signal to the phone line (46) of the phone network (48), the transmit opto-coupler output side (108) being joined in parallel with the receive opto-coupler input side (102); and
**characterized by** a hook control opto-coupler (60) having a hook input side (114) and a hook output side (116), the hook input side (114) having a hook control line (68) configured to receive a hook signal from the security panel (12), the hook output side (116) having a hook input line (118) and a hook output line (120), the hook output line (120) activating a hook switch (70) conveying the hook signal to the phone line (46) of the phone network (48), the hook input side (114) being joined serially with the receive input side (102).

14. A system as claimed in claim 13, wherein the TLCI module further comprises means (52) for matching the impedance of the phone network, the phone network (48) comprising at least one of multiple phone networks located in at least one of multiple countries and multiple geographic regions.

15. A system as claimed in claim 13, wherein the TLCI module further comprises means (52) for matching the impedance of the phone network, the impedance of the phone network (48) being at least one of a predetermined resistance value and at least one range of resistance values corresponding to at least one predetermined range of frequencies.

16. A system as claimed in any one of claims 13 to 15, wherein the hook signal further comprises on-hook and off-hook conditions, the TLCI module (44) further comprising a high impedance DC load (54) joined in parallel with at least the transmit output side (108) of the transmit opto-coupler, the high impedance DC load (54) being configured to draw a level of current to indicate to the phone network (48) when the hook signal is in the off-hook condition.

17. A system as claimed in claim 13, wherein the TLCI module further comprises an impedance matching network (52) interconnected with the receive input side (102) and the transmit output side (108), the impedance matching network (52) being configured to provide an impedance of approximately 600 ohms to provide impedance matching with a first phone network, the impedance matching network (52) being further configured to provide complex impedance matching over a range of approximately 466 ohms to 889 ohms with a second phone network.

18. A system as claimed in any one of claims 13 to 17, further comprising internal phone lines connecting the phone network (48) to a house phone (34), the TLCI module (44) further comprising means for transferring control of the phone network between the security panel (12) and the house phone (34) based on a control signal from the security panel (12).

19. A system as claimed in any one of claims 13 to 18, wherein the transmit and receive opto-couplers (58, 56) are configured in parallel with one another to reduce a level of operational voltage required on the phone network (48).

## Patentansprüche

1. Telefonleitungs-Kommunikationsschnittstellen-, TLCI-, Modul (44) eingerichtet zum Anschließen eines Sicherheitsfeldes (12) an eine Fernsprechleitung (46) eines Fernsprechnetzes (48), das TLCI-Modul (44) umfassend:
einen Empfangs-Optokoppler (56) mit einer Eingangsseite (102) und einer Ausgangsseite (104), wobei die Eingangsseite (102) eine Eingangsleitung (90) eingerichtet zum Empfangen eines Signals auf der Fernsprechleitung (46) aus dem Fernsprechnetz (48) umfasst, wobei die Ausgangsseite (104) eine Ausgangsleitung (100) eingerichtet zum Übermitteln des Signals an ein Sicherheitsfeld (12) umfasst;
einen Sende-Optokoppler (58) mit einer Eingangsseite (106) und einer Ausgangsseite (108), wobei die Optokoppler-Eingangsseite (106) eine Eingangsleitung (110) eingerichtet zum Empfangen von Sendesignalen von dem Sicherheitsfeld (12) aufweist, wobei die Sende-Optokoppler-Ausgangsseite (108) eine Ausgangsleitung (112) eingerichtet zum Übermitteln des Sendesignals zu der Fernsprechleitung (46) des Fernsprechnetzes (48) aufweist, wobei die Sende-Optokopplerausgangsseite (108) parallel mit der Empfangs-Optokoppler-Eingangsseite (102) zusammengeschaltet ist; und
**gekennzeichnet durch** einen Gabelsteuerungs-Optokoppler (60) mit einer Gabeleingangsseite (14) und einer Gabelausgangsseite (116), wobei die Gabeleingangsseite eine Gabelsteuerleitung (68) eingerichtet zum Empfangen eines Gabelsignals vom Sicherheitsfeld (12) aufweist, wobei die Gabelausgangsseite (116) eine Gabeleingangsleitung (118) und eine Gabelausgangsleitung (120) aufweist, wobei die Gabelausgangsleitung (120) einen Gabelschalter (70) zum Übermitteln des Gabelsignals zur Fernsprechleitung (46) des Fernsprechnetzes (48) betätigt, wobei die Gabelausgangsseite (116) seriell mit der Empfangseingangsseite (102) des Empfangs-Optokopplers (56) zusammengeschaltet ist.

2. TLCI-Modul nach Anspruch 1, weiterhin umfassend ein mit der Empfangseingangsseite (102) des Empfangs-Optokopplers und der Sendeausgangsseite (108) des Sende-Optokopplers zusammengeschaltetes Impedanzanpassungsnetzwerk (52), wobei das Impedanzanpassungsnetzwerk (52) zum Bereitstellen von Impedanzanpassung an das Fernsprechnetz (48) eingerichtet ist.

3. TLCI-Modul nach Anspruch 1, weiterhin umfassend ein mit der Empfangseingangsseite (102) des Empfangs-Optokopplers und der Sendeausgangsseite (108) des Sende-Optokopplers zusammengeschaltetes Impedanzanpassungsnetzwerk (52), wobei das Impedanzanpassungsnetzwerk (52) zum Bereitstellen einer Impedanz von annähernd 600 Ohm zum Bereitstellen von Impedanzanpassung an das Fernsprechnetz (48) eingerichtet ist.

4. TLCI-Modul nach Anspruch 1, weiterhin umfassend ein Impedanzanpassungsnetzwerk (52) umfassend mindestens einen Widerstand (R221, R223) und einen Kondensator (C93) zusammengeschaltet miteinander, wobei das Impedanzanpassungsnetzwerk (52) mit der Empfangseingangsseite (102) des Empfangs-Optokopplers und der Sendeausgangsseite (108) des Sende-Optokopplers zusammengeschaltet ist, wobei das Impedanzanpassungsnetzwerk (52) zum Bereitstellen von Impedanzanpassung an das Fernsprechnetz (48) eingerichtet ist.

5. TLCI-Modul nach einem beliebigen der Ansprüche 1 bis 4, wobei das Gabelsignal weiterhin Einhänge- und Aushängezustände anzeigende Signale umfasst, wobei das TLCI-Modul (44) weiterhin eine mit dem Empfangs-Optokoppler (56) und dem Gabelsteuerungs-Optokoppler (60) verbundene hochohmige Gleichstromlast (54) umfasst, wobei die hochohmige Gleichstromlast (54) zum Aufnehmen eines Strompegels eingerichtet ist, der dem Fernsprechnetz (46) anzeigt, wann das Gabelsignal sich im Aushängezustand befindet.

6. TLCI-Modul nach Anspruch 1, weiterhin umfassend ein mit der Empfangseingangsseite (102) und der Sendeausgangsseite (108) zusammengeschaltetes Impedanzanpassungsnetzwerk (52), wobei das Impedanzanpassungsnetzwerk (52) zum Bereitstellen einer Impedanz von annähernd 600 Ohm zum Bereitstellen von Impedanzanpassung an ein erstes Fernsprechnetz eingerichtet ist, wobei das Impedanzanpassungsnetzwerk (52) weiterhin zum Bereitstellen komplexer Impedanzanpassung an ein zweites Fernsprechnetzwerk eingerichtet ist.

7. TLCI-Modul nach einem beliebigen der Ansprüche 1 bis 6, weiterhin umfassend Mittel zum Erkennen eines auf dem Fernsprechnetz von einem von dem TLCI-Modul entfernten Ort übertragenen Rufzeichens (82).

8. Modul nach einem beliebigen der Ansprüche 1 bis 7, weiterhin umfassend:
Mittel (52) zum Anpassen der Impedanz der Fernsprechleitung (46) des Fernsprechnetzes (48), wobei die Impedanz der Fernsprechleitung mindestens eine einer Menge mit vorbestimmten Widerstands- und Kapazitätswerten und mindestens eines Bereichs von Widerstands- und Kapazitätswerten entsprechend mindestens einem vorbestimmten Bereich von Frequenzen ist.

9. TLCI-Modul nach einem beliebigen der vorhergehenden Ansprüche, wobei die Sende- und Empfangs-Optokoppler (58, 56) zum Verringern eines Pegels von auf dem Fernsprechnetz (48) erforderlicher Betriebsspannung parallel zueinander eingerichtet sind.

10. TLCI-Modul nach einem beliebigen der Ansprüche 2 bis 9, wobei das Mittel (52) zur Impedanzanpassung mit der Empfangseingangsseite (102) und der Sendeausgangsseite (108) zusammengeschaltet ist, wobei das Mittel (52) zur Impedanzanpassung zum Bereitstellen einer Impedanz von annähernd 600 Ohm eingerichtet ist.

11. TLCI-Modul nach einem beliebigen der vorhergehenden Ansprüche, wobei das Gabelsignal weiterhin Einhänge- und Aushängezustände anzeigende Signale umfasst, wobei das TLCI-Modul (44) weiterhin eine mit dem Empfangs-Optokoppler (56) und mit dem Gabelsteuerungs-Optokoppler (60) verbundene hochohmige Gleichstromlast (54) umfasst, wobei die hochohmige Gleichstromlast (54) zum Aufnehmen eines Strompegels eingerichtet ist, der dem Fernsprechnetz (48) anzeigt, wann sich das Gabelsignal im Aushängezustand befindet.

12. TLCI-Modul nach einem beliebigen der vorhergehenden Ansprüche, weiterhin umfassend interne, das Fernsprechnetz mit einem Haustelefon (34) verbindende Fernsprechleitungen, wobei das TLCI-Modul weiterhin Mittel zum Übertragen der Steuerung des Fernsprechnetzes zwischen dem Sicherheitsfeld (12) und dem Haustelefon (34) basierend auf einem Steuersignal von dem Sicherheitsfeld (12) umfasst.

13. Sicherheitssystem umfassend:
ein Sicherheitsfeld (12) zum Durchführen von mindestens einer von Sicherheits- und Notfunktionen zugeordneten Steuerungsoperationen; und
ein Telefonleitungs-Kommunikationsschnittstellen-(TLCI-)Modul (44) eingerichtet zum Anschließen des Sicherheitsfeldes (12) an ein Fernsprechnetz (48), das TLCI-Modul (44) umfassend:
einen Empfangs-Optokoppler (56) mit einer Eingangsseite (102) und einer Ausgangsseite (104), wobei die Eingangsseite (102) eine zum Empfangen eines Signals auf der Fernsprechleitung (46) vom Fernsprechnetz (48) eingerichtete Eingangsleitung (90) umfasst, wobei die Ausgangsseite (104) eine zum Übermitteln des Signals zu einem Sicherheitsfeld (12) eingerichtete Ausgangsleitung (100) umfasst;
einen Sende-Optokoppler (58) mit einer Eingangsseite (106) und einer Ausgangsseite (108), wobei die Sende-Optokoppler-Eingangsseite (106) eine zum Empfangen von Sendesignalen vom Sicherheitsfeld (12) eingerichtete Eingangsleitung (110) aufweist, wobei die Sende-Optokoppler-Ausgangsseite (108) eine zum Übermitteln des Sendesignals zur Fernsprechleitung (46) des Fernsprechnetzes (48) eingerichtete Ausgangsleitung (112) aufweist, wobei die Sende-Optokoppler-Ausgangsseite (108) parallel zu der Empfangs-Optokoppler-Eingangsseite (102) geschaltet ist; und
**gekennzeichnet durch** einen Gabelsteuerungs-Optokoppler (60) mit einer Gabeleingangsseite (114) und einer Gabelausgangsseite (116), wobei die Gabeleingangsseite (114) eine zum Empfangen eines Gabelsignals vom Sicherheitsfeld (12) eingerichtete Gabelsteuerleitung (68) aufweist, wobei die Gabelausgangsseite (116) eine Gabeleingangsleitung (118) und eine Gabelausgangsleitung (120) aufweist, wobei die Gabelausgangsleitung (120) einen das Gabelsignal zur Fernsprechleitung (46) des Fernsprechnetzes (48) übermittelnden Gabelschalter (70) betätigt, wobei die Gabeleingangsseite (114) seriell mit der Empfangseingangsseite (102) verbunden ist.

14. System nach Anspruch 13, wobei das TLCI-Modul weiterhin Mittel (52) zum Anpassen der Impedanz des Fernsprechnetzes umfasst, wobei das Fernsprechnetz (48) mindestens eines von in mindestens einem von mehreren Ländern und mehreren geografischen Gebieten befindlichen mehreren Fernsprechnetzen umfasst.

15. System nach Anspruch 13, wobei das TLCI-Modul weiterhin Mittel (52) zum Anpassen der Impedanz des Fernsprechnetzes umfasst, wobei die Impedanz des Fernsprechnetzes (48) mindestens eines eines vorbestimmten Widerstandswertes und mindestens eines Bereichs von Widerstandswerten entsprechend mindestens einem vorbestimmten Bereich von Frequenzen ist.

16. System nach einem beliebigen der Ansprüche 13 bis 15, wobei das Gabelsignal weiterhin Einhänge- und Aushängezustände umfasst, wobei das TCLI-Modul (44) weiterhin eine parallel zu mindestens der Sendeausgangsseite (108) des Sende-Optokopplers geschaltete hochohmige Gleichstromlast (54) umfasst, wobei die hochohmige Gleichstromlast (54) zur Aufnahme eines Strompegels eingerichtet ist, um dem Fernsprechnetz (48) anzuzeigen, wann sich das Gabelsignal im Aushängezustand befindet.

17. System nach Anspruch 13, wobei das TCLI-Modul weiterhin ein mit der Empfangseingangsseite (102) und der Sendeausgangsseite (108) zusammengeschaltetes Impedanzanpassungsnetzwerk (52) umfasst, wobei das Impedanzanpassungsnetzwerk (52) zum Bereitstellen einer Impedanz von annähernd 600 Ohm zum Bereitstellen von Impedanzanpassung an ein erstes Fernsprechnetz eingerichtet ist, wobei das Impedanzanpassungsnetzwerk (52) weiterhin zum Bereitstellen komplexer Impedanzanpassung über einen Bereich von annähernd 466 Ohm bis 889 Ohm an ein zweites Fernsprechnetz eingerichtet ist.

18. System nach einem beliebigen der Ansprüche 13 bis 17, weiterhin umfassend interne, das Fernsprechnetz (48) mit einem Haustelefon (34) verbindende Fernsprechleitungen, wobei das TLCI-Modul (44) weiterhin Mittel zum Übertragen der Steuerung des Fernsprechnetzes zwischen dem Sicherheitsfeld (12) und dem Haustelefon (34) basierend auf einem Steuersignal von dem Sicherheitsfeld (12) umfasst.

19. System nach einem beliebigen der Ansprüche 13 bis 18, wobei die Sende- und Empfangs-Optokoppler (58, 56) zum Verringern eines Pegels von auf dem Fernsprechnetz (48) erforderter Betriebsspannung parallel zueinander eingerichtet sind.

## Revendications

1. Module d'interface de communication sur ligne téléphonique (TLCI pour *« Telephone Line Communication Interface* ») (44), configuré pour interfacer un panneau de sécurité (12) avec une ligne téléphonique (46) d'un réseau téléphonique (48), le module TLCI (44) comprenant :
un optocoupleur de réception (56) comportant un côté d'entrée (102) et un côté de sortie (104), le côté d'entrée (102) comprenant une ligne d'entrée (90) configurée pour recevoir un signal sur la ligne téléphonique (46) en provenance du réseau téléphonique (48), le côté de sortie (104) comprenant une ligne de sortie (100) configurée pour envoyer le signal à un panneau de sécurité (12) ;
un optocoupleur d'émission (58) comportant un côté d'entrée (106) et un côté de sortie (108), le côté d'entrée (106) de l'optocoupleur d'émission comprenant une ligne d'entrée (110) configurée pour recevoir des signaux d'émission en provenance du panneau de sécurité (12), le côté de sortie (108) de l'optocoupleur d'émission comprenant une ligne de sortie (112) configurée pour envoyer le signal d'émission vers la ligne téléphonique (46) du réseau téléphonique (48), le côté de sortie (108) de l'optocoupleur d'émission étant monté en parallèle avec le côté d'entrée de réception (102) de l'optocoupleur de réception ;
**caractérisé par** :
un optocoupleur de commande de connexion (60) comportant un côté d'entrée de connexion (114) et un côté de sortie de connexion (116), le côté d'entrée de connexion comprenant une ligne de commande de connexion (68) configurée pour recevoir un signal de connexion du panneau de sécurité (12), le côté de sortie de connexion (116) comprenant une ligne d'entrée de connexion (118) et une ligne de sortie de connexion (120), la ligne de sortie de connexion (120) activant un commutateur de connexion (70) pour envoyer le signal de connexion à la ligne téléphonique (46) du réseau téléphonique (48), le côté de sortie de connexion (116) étant monté en série avec le côté d'entrée (102) de l'optocoupleur de réception (56).

2. Module TLCI selon la revendication 1, comprenant en outre un réseau d'adaptation d'impédance (52) interconnecté avec le côté d'entrée de réception (102) de l'optocoupleur de réception et le côté de sortie d'émission (108) de l'optocoupleur d'émission, le réseau d'adaptation d'impédance (52) étant configuré pour fournir une adaptation d'impédance avec le réseau téléphonique (48).

3. Module TLCI selon la revendication 1, comprenant en outre un réseau d'adaptation d'impédance (52) interconnecté avec le côté d'entrée de réception (102) de l'optocoupleur de réception et le côté de sortie d'émission (108) de l'optocoupleur d'émission, le réseau d'adaptation d'impédance (52) étant configuré pour fournir une impédance d'environ 600 ohms afin d'assurer une adaptation d'impédance avec le réseau téléphonique (48).

4. Module TLCI selon la revendication 1, comprenant en outre un réseau d'adaptation d'impédance (52) comprenant au moins une résistance (R221, R223) et un condensateur (C93) interconnectés l'un à l'autre, le réseau d'adaptation d'impédance (52) étant interconnecté avec le côté d'entrée de réception (102) de l'optocoupleur de réception et le côté de sortie d'émission (108) de l'optocoupleur d'émission, le réseau d'adaptation d'impédance (52) étant configuré pour fournir une adaptation d'impédance avec le réseau téléphonique (48).

5. Module TLCI selon l'une quelconque des revendications 1 à 4, dans lequel le signal de connexion comprend en outre des signaux indiquant des états de connexion et de déconnexion, le module TLCI (44) comprenant en outre une charge de courant continu à haute impédance (54) associée à l'optocoupleur de réception (56) et à l'optocoupleur de commande de connexion (60), la charge de courant continu à haute impédance (54) étant configurée pour tirer un courant d'un niveau qui indique au réseau téléphonique (46) quand le signal de connexion est dans l'état de déconnexion.

6. Module TLCI selon la revendication 1, comprenant en outre un réseau d'adaptation d'impédance (52) interconnecté avec le côté d'entrée de réception (102) et le côté de sortie d'émission (108), le réseau d'adaptation d'impédance (52) étant configuré pour fournir une impédance d'environ 600 ohms afin d'assurer une adaptation d'impédance avec un premier réseau téléphonique, le réseau d'adaptation d'impédance (52) étant en outre configuré pour assurer une adaptation d'impédance complexe avec un second réseau téléphonique.

7. Module TLCI selon l'une quelconque des revendications 1 à 6, comprenant en outre un moyen de détection d'un signal de sonnerie (82) émis sur le réseau téléphonique à partir d'une position distante par rapport au module TLCI.

8. Module TLCI selon l'une quelconque des revendications 1 à 7, comprenant en outre :
un moyen (52) destiné à adapter l'impédance de la ligne téléphonique (46) du réseau téléphonique (48), l'impédance de la ligne téléphonique étant au moins une impédance dans un ensemble de valeurs prédéterminées de résistance et de capacité et au moins une plage de valeurs de résistance et de capacité correspondant à au moins une plage prédéterminée de fréquences.

9. Module TLCI selon l'une quelconque des revendications précédentes, dans lequel les optocoupleurs d'émission et de réception (58, 56) sont montés en parallèle entre eux afin de réduire le niveau de la tension de fonctionnement nécessaire sur le réseau téléphonique (48).

10. Module TLCI selon l'une quelconque des revendications 2 à 9, dans lequel le moyen d'adaptation d'impédance (52) est interconnecté avec le côté d'entrée de réception (102) et le côté de sortie d'émission (108), le moyen d'adaptation d'impédance (52) étant configuré pour fournir une impédance d'environ 600 ohms.

11. Module TLCI selon l'une quelconque des revendications précédentes, dans lequel le signal de connexion comprend en outre des signaux indiquant des états de connexion et de déconnexion, le module TLCI (44) comprenant en outre une charge de courant continu à haute impédance (54) associée à l'optocoupleur de réception (56) et à l'optocoupleur de commande de connexion (60), la charge de courant continu à haute impédance (54) étant configurée pour tirer un courant d'un niveau qui indique au réseau téléphonique (48) quand le signal de connexion est dans l'état de déconnexion.

12. Module TLCI selon l'une quelconque des revendications précédentes, comprenant en outre des lignes téléphoniques intérieures connectant le réseau téléphonique à un téléphone intérieur (34), le module TLCI comprenant en outre un moyen destiné à transférer la commande du réseau téléphonique entre le panneau de sécurité (12) et le téléphone intérieur (34), en fonction d'un signal de commande fourni par le panneau de sécurité (12).

13. Système de sécurité comprenant :
un panneau de sécurité (12) destiné à effectuer des opérations de commande associées à au moins une fonction de sécurité et d'urgence ; et
un module d'interface de communication sur ligne téléphonique (TLCI pour « *Telephone Line Communication Interface* ») (44) configuré pour interfacer le panneau de sécurité (12) avec un réseau téléphonique (48), le module TLCI (44) comprenant :
un optocoupleur de réception (56) comportant un côté d'entrée (102) et un côté de sortie (104), le côté d'entrée (102) comprenant une ligne d'entrée (90) configurée pour recevoir un signal sur la ligne téléphonique (46) en provenance du réseau téléphonique (48), le côté de sortie (104) comprenant une ligne de sortie (100) configurée pour envoyer le signal à un panneau de sécurité (12) ;
un optocoupleur d'émission (58) comportant un côté d'entrée (106) et un côté de sortie (108), le côté d'entrée (106) de l'optocoupleur d'émission comprenant une ligne d'entrée (110) configurée pour recevoir des signaux d'émission en provenance du panneau de sécurité (12), le côté de sortie (108) de l'optocoupleur d'émission comprenant une ligne de sortie (112) configurée pour envoyer le signal d'émission vers la ligne téléphonique (46) du réseau téléphonique (48), le côté de sortie (108) de l'optocoupleur d'émission étant monté en parallèle avec le côté d'entrée de réception (102) de l'optocoupleur de réception ;
**caractérisé par** :
un optocoupleur de commande de connexion (60) comportant un côté d'entrée de connexion (114) et un côté de sortie de connexion (116), le côté d'entrée de connexion (114) comprenant une ligne de commande de connexion (68) configurée pour recevoir un signal de connexion du panneau de sécurité (12), le côté de sortie de connexion (116) comprenant une ligne d'entrée de connexion (118) et une ligne de sortie de connexion (120), la ligne de sortie de connexion (120) activant un commutateur de connexion (70) pour envoyer le signal de connexion à la ligne téléphonique (46) du réseau téléphonique (48), le côté d'entrée de connexion (114) étant monté en série avec le côté d'entrée de réception (102).

14. Système selon la revendication 13, dans lequel le module TLCI comprend en outre un moyen (52) pour adapter l'impédance du réseau téléphonique, le réseau téléphonique (48) comprenant au moins un réseau sur de multiples réseaux téléphoniques situés dans au moins un pays ou une région sur de multiples pays et de multiples régions géographiques.

15. Système selon la revendication 13, dans lequel le module TLCI comprend en outre un moyen (52) pour adapter l'impédance du réseau téléphonique, l'impédance du réseau téléphonique (48) étant au moins soit une valeur de résistance prédéterminée, soit une plage de valeurs de résistance correspondant à au moins une plage prédéterminée de fréquences.

16. Système selon l'une quelconque des revendications 13 à 15, dans lequel le signal de connexion comprend en outre des états de connexion et de déconnexion, le module TLCI (44) comprenant en outre une charge de courant continu à haute impédance (54) montée en parallèle avec au moins le côté de sortie d'émission (108) de l'optocoupleur d'émission, la charge de courant continu à haute impédance (54) étant configurée pour tirer un courant d'un niveau qui indique au réseau téléphonique (48) quand le signal de connexion est dans l'état de déconnexion.

17. Système selon la revendication 13, dans lequel le module TLCI (44) comprend en outre un réseau d'adaptation d'impédance (52) interconnecté avec le côté d'entrée de réception (102) et le côté de sortie d'émission (108), le réseau d'adaptation d'impédance (52) étant configuré pour fournir une impédance d'environ 600 ohms afin d'assurer une adaptation d'impédance avec un premier réseau téléphonique, le réseau d'adaptation d'impédance (52) étant en outre configuré pour assurer une adaptation d'impédance complexe sur une plage d'environ 466 ohms à 889 ohms avec un second réseau téléphonique.

18. Système selon l'une quelconque des revendications 13 à 17, comprenant en outre des lignes téléphoniques intérieures connectant le réseau téléphonique (48) à un téléphone intérieur (34), le module TLCI (44) comprenant en outre un moyen destiné à transférer la commande du réseau téléphonique entre le panneau de sécurité (12) et le téléphone intérieur (34), en fonction d'un signal de commande fourni par le panneau de sécurité (12).

19. Système selon l'une quelconque des revendications 13 à 18, dans lequel les optocoupleurs d'émission et de réception (58, 56) sont montés en parallèle entre eux afin de réduire le niveau de la tension de fonctionnement nécessaire sur le réseau téléphonique (48).
